# EUROPÄISCHE PATENTANMELDUNG

(11) **EP 2 251 279 A1**
(43) Veröffentlichungstag der Anmeldung: **17.11.2010**
(21) Anmeldenummer: 10450062.4
(22) Anmeldetag: 20.04.2010
(51) Int. Cl.: B65G 21/20, B65G 47/52

(54) **Umlenkvorrichtung**

(30) Priorität: 12.05.2009 AT 7242009
(71) Anmelder: Springer Maschinenfabrik AG, 9360 Friesach (AT)
(72) Erfinder: Roth, Heinz, 9360 Friesach (AT)
(74) Vertreter: Gibler & Poth Patentanwälte OEG

(57) **Zusammenfassung**

Bei einer Umlenkvorrichtung (1) für längliches Stückgut (8), wobei das Stückgut (8) eingangseitig im Längstransport aufgenommen wird und ausgangsseitig im Quertransport abgegeben wird, wird dazu dass das längliche Stückgut (8) schnell, anlagenschonend, effizient, stückgutschonend und bei hohem Durchsatz vom Längstransport in den Quertransport umgelenkt werden kann vorgeschlagen, dass eine Bremseinrichtung (2) mit wenigstens einem eine Förderebene (3) ausbildenden Förderband (21) vorgesehen ist, und dass das Förderband (21) zumindest bereichsweise luftdurchlässig ist und unterhalb Förderebene (3) eine Einrichtung zur Ausbildung eines Unterdruck angeordnet ist.

## Beschreibung

Die Erfindung betrifft eine Umlenkvorrichtung gemäß dem Oberbegriff des Patentanspruches 1.

Es ist bekannt längliche Stückgüter, beispielsweise Balken, Träger und/oder Bretter, im Längstransport zu fördern. Weiters ist bekannt längliche Stückgüter im Quertransport zu fördern. Beide Fördermethoden werden in einer Anlage oftmals hintereinander geschaltet, wobei die Stückgüter vom Längstransport in den Quertransport umzulenken sind.

Das Umlenken vom Längstransport in den Quertransport kann manuell, also von Hand, durchgeführt werden indem das Stückgut von einem ersten Förderer, auf welchem das Stückgut beispielsweise im Quertransport angefördert wird, abgehoben wird und auf einen zweiten Förderer aufgelegt wird, auf welchem das Stückgut beispielsweise im Längstransport abgefördert wird. Dieses Umlenken kann auch maschinell, also mittels automatisierter Greifer, erfolgen. Nachteilig dabei ist, dass der manuelle oder maschinelle Aufwand hoch ist. Bei anderen bekannten Umlenkmethoden der Förderrichtung der länglichen Stückgüter werden die Anlage und/oder die Stückgüter belastet.

Industrielle Anlagen sollen einen möglichst hohen Durchsatz aufweisen, welcher beispielsweise in Stückgüter pro Stunde gemessen werden kann. Wenngleich beim Quertransport der länglichen Stückgüter auch bei einem hohen Durchsatz die Fördergeschwindigkeit verhältnismäßig gering sein kann, so ist die Fördergeschwindigkeit beim Längstransport der länglichen Stückgüter verhältnismäßig hoch. Dies insbesondere wenn die länglichen Stückgüter um ein vielfaches länger als breit sind, wie dies üblicherweise bei Balken, Träger und/oder Brettern der Fall ist. Mögliche Längen-Breitenverhältnisse bei Balken, Trägem und/oder Brettern sind 100:1, wobei für einen konstanten Durchsatz der Stückgüter sowohl im Quertransport als auch im Längstransport, die Längstransportfördergeschwindigkeit jedes Stückgutes der Stückgüter weitaus höher als die Quertransportfördergeschwindigkeit desselben Stückgutes sein kann. Die anlagenschonende, stückgutschonende, durchsatzstarke und effizient Umlenkung vom Längstransport in den Quertransport ist dabei ein bestehendes Problem.

Aufgabe der Erfindung ist es daher eine Umlenkvorrichtung der eingangs genannten Art anzugeben, mit welcher die genannten Nachteile vermieden werden können und mit welcher das längliche Stückgut schnell, anlagenschonend, effizient, stückgutschonend und bei hohem Durchsatz vom Längstransport in den Quertransport umgelenkt werden kann.

Erfindungsgemäß wird dies durch die Merkmale des Patentanspruches 1 erreicht.

Dadurch ergibt sich der Vorteil, dass das längliche Stückgut zuverlässig auf die Bremseinrichtung gefördert werden kann und zuverlässig von der Bremseinrichtung abgebremst werden kann. Der von unten auf das Stückgut wirkende Unterdruck bewirkt dabei ein zuverlässiges Ansaugen des Stückgutes an das Förderband. Aufgrund des Ansaugens des Stückgutes am Förderband wird die Reibung zwischen Stückgut und Förderband wesentlich erhöht und das Stückgut kann zuverlässig verzögernd von der Bremseinrichtung gefördert werden und dabei insbesondere zeitweise ohne jegliche Relatiwerschiebung relativ zum bewegten Förderband ausgangsseitig der Bremseinrichtung ausgegeben werden. Vorteilhaft dabei ist, dass ein Hinausschießen des Stückgutes über die Bremseinrichtung hinaus in eine erste Transportrichtung zuverlässig verhindert werden kann.

Die Erfindung betrifft weiters ein Verfahren zum Umlenken länglichen Stückgutes gemäß dem Oberbegriff des Patentanspruches 10.

Weitere Aufgabe ist es, eine Verfahren zum Umlenken länglichen Stückgutes anzugeben, mit welchem die eingangs genannten Nachteile vermieden werden können und mit welchem das längliche Stückgut schnell, anlagenschonend, effizient, stückgutschonend und mit hohem Durchsatz vom Längstransport in den Quertransport umgelenkt werden kann.

Auch das Verfahren ermöglicht die vorstehenden Vorteile und vorteilhaften Wirkungen.

Die Unteransprüche, welche ebenso wie die Patentansprüche 1 und 10 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 die Umlenkvorrichtung einer besonders vorteilhaften ersten Ausführungsform im Grundriss; und
Fig. 2 im Grundriss eine Arbeitseinrichtung, welche Arbeitseinrichtung die Umlenkvorrichtung der Fig. 1, eine Längsarbeitsstation und eine zweite Umlenkstation umfasst.

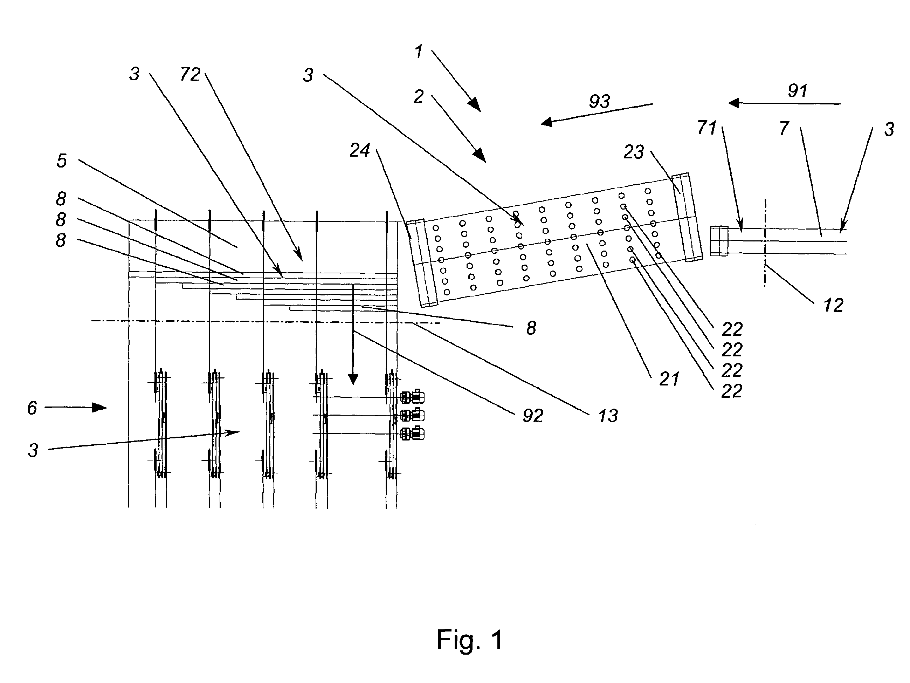

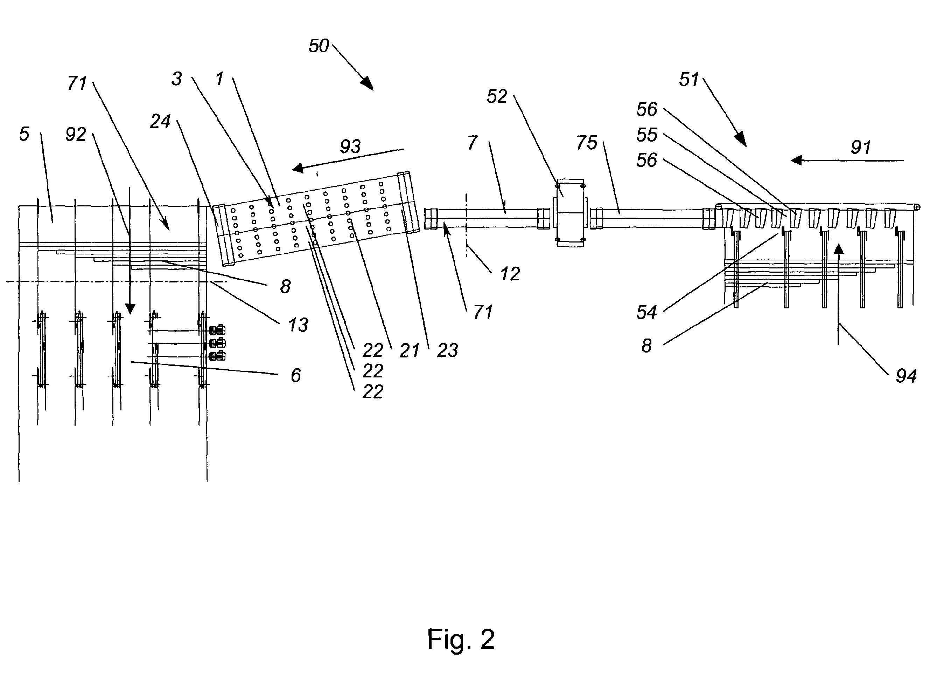

Die Fig. 1 und 2 zeigen eine vorteilhafte erste Ausführungsform einer Umlenkvorrichtung 1 für längliches Stückgut 8, wobei das Stückgut 8 eingangseitig im Längstransport aufgenommen wird und ausgangsseitig im Quertransport abgegeben wird. Damit das längliche Stückgut schnell, anlagenschonend, effizient und stückgutschonend vom Längstransport in den Quertransport umgelenkt werden kann wird vorgeschlagen, dass eine Bremseinrichtung 2 mit wenigstens einem eine Förderebene 3 ausbildenden Förderband 21 vorgesehen ist, und dass das Förderband 21 zumindest bereichsweise luftdurchlässig ist und unterhalb der Förderebene 3 eine Einrichtung zur Ausbildung eines Unterdrucks angeordnet ist. Hiebei wird das Stückgut 8 eingangseitig in einer ersten Transportrichtung 91 aufgenommen und ausgangseitig in einer zweiten Transportrichtung 92 abgegeben. Insbesondere kann die Einrichtung zur Ausbildung des Unterdrucks unmittelbar unterhalb der Förderebene 3 angeordnet sein, wobei der die Förderebene 3 Abschnitt des Förderbandes 21 von unten von der Einrichtung zur Ausbildung des Unterdrucks kontaktiert werden kann.

Ein Stückgut ist üblicherweise als längliches Stückgut 8 zu bezeichnen, wenn dieses eindeutig in eine Richtung eine längste Erstreckung aufweist, welche Richtung als Längsrichtung des länglichen Stückgutes 8 bezeichnet werden kann. Übliche längliche Stückgüter 8 sind Balken, Bretter, Staffel, Baumstämme, Schichthölzer und Träger.

Die länglichen Stückgüter 8 können insbesondere aus Holz, Kunststoff und/oder Metall gefertigt sein, wobei sich die Umlenkvorrichtung 1 aufgrund der besonders stückgutschonenden Umlenkung insbesondere zur Umlenkung von länglichem Stückgut 8 aus Holz eignet.

Die Umlenkvorrichtung 1 kann insbesondere ausgebildet sein, um längliche Stückguter 8 einer spezifischen Dichte zwischen 300kg/m³ und 1500kg/m³ umzulenken und zu fördern. Die Umlenkvorrichtung 1 kann insbesondere weiters ausgebildet sein, um längliche Stückguter 8 einer Länge zwischen 1m und 30m umzulenken und zu fördern. Zum Fördern und zum Umlenken der dementsprechenden länglichen Stückgüter 8 können die Bremseinrichtung 2 und die Umlenkvorrichtung 1 entsprechend massiv ausgebildet sein, wozu die Umlenkvorrichtung 1 sowie die Bremseinrichtung 2 insbesondere ausgebildet sein können, um längliche Stückguter 8, welche eine Masse zwischen 10kg und 5000kg aufweisen, zu fördern und umzulenken.

Der Längstransport des länglichen Stückgutes 8 ist dessen Förderung in Längsrichtung des länglichen Stückgutes 8. Bei der ersten Ausführungsform der Umlenkvorrichtung 1 ist der Längstransport in die erste Transportrichtung 91 gerichtet. Der Quertransport des länglichen Stückgutes 8 ist dessen Förderung in Normalrichtung zur Längserstreckung des länglichen Stückgutes 8. Bei der ersten Ausführungsform der Umlenkvorrichtung 1 ist der Quertransport in die zweite Transportrichtung 92 gerichtet.

Vorteilhaft an der Umlenkvorrichtung 1 ist, dass das längliche Stückgut 8 wenigstens zeitweise und wenigstens bereichsweise aktiv von der Bremseinrichtung angesaugt wird. Durch dass aktive Ansaugen des Förderbandes kann verhindert sein kann, dass das längliche Stückgut 8 an dem Förderband in unerwünschter Weise entlang gleitet bzw. in die erste Transportrichtung 91 über die Bremseinrichtung hinaus gleitet. Vorteilhaft dabei ist, dass das längliche Stückgut derart zuverlässig und exakt auf eine vorbestimmbare Fördergeschwindigkeit abgebremst werden kann und dass das längliche Stückgut 8 auch mit hoher Verzögerung abgebremst werden kann. Vorteilhaft dabei ist, dass das längliche Stückgut 8 besonders schnell, effizient, anlagenschonend und stückgutschonend vom Längstransport in den Quertransport umgelenkt werden kann und dass die Umlenkvorrichtung 1 einen hohen Durchsatz aufweisen kann.

Dadurch ergibt sich der Vorteil, dass das längliches Stückgut 8 auch bei einem hohen Längen-Breiten-Verhältnis effizient und mit hohem Durchsatz sowohl im Längstransport als auch im Quertransport gefördert werden kann. Beim länglichen Stückgut 8 kann das Längen-Breiten-Verhältnis bis zu 100:1 betragen. Für einen konstanten Durchsatz der Stückgüter 8 sowohl im Quertransport als auch im Längstransport, ist die Längsfördergeschwindigkeit jedes Stückgutes 8 der Stückgüter 8 deutlich höher als die Querfördergeschwindigkeit desselben Stückgutes 8 zu wählen. Die dazu nötige Verzögerung des länglichen Stückgutes 8 beim Abbremsen aus dem Längstransport ist dementsprechend groß, welche große Verzögerung mittels der Bremseinrichtung 2 zuverlässig gewährleistet werden kann. Dies kann insbesondere beim als Balken, Träger und/oder Brett ausgebildetem länglichen Stückgut 8 von besonderem Vorteil sein.

Das Stückgut 8 kann insbesondere mittels eines Verfahren zum Umlenken des länglichen Stückgutes 8 umgelenkt werden, wobei das Stückgut 8 eingangseitig im Längstransport aufgenommen wird und ausgangsseitig im Quertransport abgegeben wird. Bei dem Verfahren ist vorgesehen, dass das Stückgut 8 eingangsseitig im Längstransport auf die Bremseinrichtung 2 mit dem wenigstens einen die Förderebene 3 ausbildenden und zumindest bereichsweise luftdurchlässig ausgebildeten Förderband 21 gefördert wird, dass mit der unterhalb der Förderebene 3 angeordneten Einrichtung zur Ausbildung des Unterdrucks ein Unterdruck ausgebildet wird, wobei das Stückgut 8 an das Förderband 21 angesaugt wird, und dass das Stückgut 8 wenigstens zeitweise mit der Bewegung des Förderbandes 21 mitbewegt wird. Dieses Verfahren kann insbesondere an der Umlenkvorrichtung 1 ausgeführt werden. Der Unterdruck ist ein Druck geringer als der Umgebungsdruck. Der Unterdruck kann zwischen dem 0,5fachen und dem 0,95fachen des Umgebungsdrucks ausgebildet sein. Wenn der Umgebungsdruck als Normaldruck ausgebildet ist, kann der Unterdruck dem 0,5fachen bis 0,95fachen des Normaldrucks ausgebildet sein, womit der Unterdruck in etwa zwischen 50kPa und 96kPa betragen kann.

Zur zuverlässigen eingangseitigen Aufnahme des Stückgutes 8 im Längstransport kann die Umlenkvorrichtung 1 wenigstens einen ersten Endbereich 71 eines Längsförderers 7 umfassen, wobei der Längsförderer 7 zum eingangseitigen Längstransport des Stückgutes 8 vorgesehen ist. Zur zuverlässigen ausgangsseitigen Abgabe des Stückgutes 8 im Quertransport kann die Umlenkvorrichtung 1 wenigstens einen zweiten Endbereich 72 eines Querförderers 5 umfassen, wobei der Querförderer 5 zum ausgangsseitigen Quertransport des Stückgutes 8 vorgesehen ist. In diesem Sinne ist bei der ersten Ausführungsform der Umlenkvorrichtung 1 die eingangsseitige erste Vorrichtungsgrenze 12 der Umlenkvorrichtung 1 mit strichlierter Linie gekennzeichnet. Die ausgangsseitige zweite Vorrichtungsgrenze 13 der Umlenkvorrichtung 1 ist ebenso mit strichlierter Linie gekennzeichnet. Der Längsförderer 7 kann - wie dargestellt - die erste Vorrichtungsgrenze 12 überragen und ist zum Verbinden der Umlenkvorrichtung 1 mit - im Fördersinn des Stückgutes 8 der Umlenkvorrichtung 1 vorgeschalteten - weiteren Arbeitsstationen und/oder Prozessstationen vorgesehen. Der Querförderer 5 kann - wie dargestellt - die zweite Vorrichtungsgrenze 13 überragen und ist zum Verbinden der Umlenkvorrichtung 1 mit - im Fördersinn des Stückgutes 8 der Umlenkvorrichtung 1 nachgeschalteten - weiteren Arbeitsstationen und/oder Prozessstationen vorgesehen.

Insbesondere können der Querförderer 5 und der Längsförderer 7 jeweils eine auf Höhe der Förderebene 3 angeordnete Querförderebene bzw. Längsförderebene zur Förderung des Stückgutes 8 ausbilden. Vorteilhaft dabei ist, dass das längliche Stückgut 8 während dessen Umlenkung im Wesentlichen in einer Ebene gefördert wird, welche eine Ebene als die Förderebene 3 bezeichnet werden kann. Weiters kann die Förderebene 3 im Wesentlichen waagerecht ausgebildet sein, womit das Stückgut 8 während dessen Umlenkung im Wesentlichen in der Waagerechten gefördert werden kann.

In vorteilhafter Weise kann die Förderebene 3 horizontal angeordnet sein.

Die Umlenkvorrichtung 1, kann in vorteilhafter Weise derart ausgebildet sein, dass das Förderband 21 normal zur Förderebene 3 Durchgangsöffnungen 22 zur Ausbildung der Luftdurchlässigkeit aufweist. Der ansaugende Effekt kann derart besonders einfach und effektiv erwirkt werden. Bei anliegendem Unterdruck unterhalb der Förderebene 3 wird das oberhalb des Förderbandes 21 befindliche Umgebungsgas, insbesondere die Umgebungsluft, durch das luftdurchlässige Förderband 21 hindurch von der Förderebene 3 in Richtung nach unten, insbesondere vertikal nach unten, gesogen, womit der das Stückgut 8 ansaugende Effekt bewirkt ist.

Die Bremseinrichtung 2 kann insbesondere derart ausgebildet sein, dass das endlose Förderband 21 umlaufend um eine erste Rolle 23 und um eine zweite Rolle 24 gespannt ist. Die erste Rolle 23 kann das eingangsseitige Ende der Bremseinrichtung 2 ausbilden. Die zweite Rolle 24 kann das ausgangsseitige Ende der Bremseinrichtung 2 ausbilden.

Die Einrichtung zur Ausbildung des Unterdrucks kann in diesem Zusammenhang - wenigstens bereichsweise - zwischen der ersten Rolle 23 und der zweiten Rolle 24 angeordnet sein.

Insbesondere kann vorgesehen sein, dass die Einrichtung zur Ausbildung des Unterdrucks an die Unterseite des Förderbandes 21 angrenzt. Die Einrichtung zur Ausbildung des Unterdrucks kann als Abzug ausgebildet sein und eine trichterförmige Ansaugöffnung aufweisen, welche die Unterseite des Förderbandes 21 berührt, also der Förderebene 3 gegenüber liegt.

In einer zweiten Ausführungsform der Umlenkvorrichtung 1 kann vorgesehen sein, dass die Einrichtung zur Ausbildung eines Unterdruck mehrere Einzelsegmente, insbesondere mehrere Einzelabsaugungen, umfasst, und dass die Einzelsegmente zur Ausbildung zueinander unterschiedlicher Unterdrücke in nebeneinanderliegenden Bereichen unterhalb der Förderebene 3 angeordnet sind und unabhängig voneinander steuerbar sind. Insbesondere können die Einzelsegmente angrenzend nebeneinander angeordnet sein. Vorteilhaft dabei ist, dass entlang einer Bewegungsrichtung 93 des Förderbandes 21 unterschiedliche Unterdrücke, also Unterdrücke unterschiedlicher Stärke, ausbildbar sind. Dadurch ergibt sich der Vorteil, dass die Zeitspanne während der Förderung des Stückgutes 8 entlang der Bremseinrichtung 2 während welcher und/oder der Bereich der Bremseinrichtung 2 in welchem das längliche Stückgut 8 angesaugt wird exakt vorbestimmbar ist. Vorteilhaft dabei ist ebenso, dass derart die Zeitspanne während welcher das längliche Stückgut 8 angesaugt wird, welche Zeitspanne als Ansaugzeitspanne benennbar ist, minimiert werden kann, womit das Stückgut 8 besonders energieeffizient und besonders anlagenschonend abgebremst werden kann.

In diesem Zusammenhang kann vorgesehen sein, dass der Unterdruck entlang der Bewegungsrichtung 93 des Förderbandes 21 variiert, insbesondere variiert wird. Insbesondere kann der Unterdruck im Wesentlichen kontinuierlich variieren bzw. variiert werden, also ein kontinuierlicher Unterdruckverlauf entlang der Bewegungsrichtung 93 des Förderbandes 21 ausgebildet sein bzw. ausgebildet werden. Die im Wesentlichen kontinuierliche Variation des Unterdrucks kann mittels einer großen Anzahl an Einzelsegmenten erzielt werden und/oder dadurch, dass die Einrichtung zur Ausbildung des Unterdrucks zur kontinuierlichen Variierung des Unterdrucks in Bewegungsrichtung 93 des Förderbandes 21 geformte Ansaugelemente aufweist.

Insbesondere kann der Unterdruck in Bewegungsrichtung 93 stufenweise variiert werden. Beispielsweise kann der Unterdruck in Bewegungsrichtung 93 zuerst dem 0,95fachen bis 0,85fachen des Umgebungsdrucks entsprechen und in einem anschließenden Bereich dem 0,85fachen bis 0,5fachen des Umgebungsdrucks entsprechen. Auch die stufenweise Variation des Unterdrucks in Bewegungsrichtung 93 kann mittels mehrerer Einzelsegmenten erzielt werden und/oder dadurch, dass die Einrichtung zur Ausbildung des Unterdrucks zur stufenweisen Variierung des Unterdrucks in Bewegungsrichtung 93 des Förderbandes 21 geformte Ansaugelemente aufweist.

In besonders vorteilhafter Weise kann vorgesehen sein, dass die Bewegungsrichtung 93 des Förderbandes 21 in der Förderebene 3 mit der eingangseitigen ersten Transportrichtung 91 im Längstransport einen Winkel im Bereich von 0° bis 25°, insbesondere von 5° bis 15°, einschließt. Vorteilhafterweise kann das Stückgut 8 dabei am Förderband 21 sowohl im Längstransport als auch im Quertransport gefördert werden. Vorteilhaft dabei ist, dass das Stückgut 8 dabei in der ersten Transportrichtung abgebremst und in der zweiten Transportrichtung beschleunigt werden kann. In vorteilhafter Weise ist hiebei vorgesehen sein, dass Bewegungsgeschwindigkeit des Förderbandes 21 in die Bewegungsrichtung 93 eine Geschwindigkeitskomponente in die zweite Transportrichtung 92 aufweist. Insbesondere kann hiebei vorgesehen sein, dass diese Geschwindigkeitskomponente in die zweite Transportrichtung 92 gleich der Querfördergeschwindigkeit des länglichen Stückgutes 8 am Querförderer 5 ist, welche Querfördergeschwindigkeit ebenfalls in die zweite Transportrichtung 92 gerichtet sein kann. Insbesondere in diesem Zusammenhang kann vorgesehen sein, dass die Bewegungsrichtung 93 des Förderbandes 21 in der Förderebene 3 mit der ausgangsseitigen zweiten Transportrichtung 92 im Quertransport einen Winkel im Bereich von 65° bis 90°, insbesondere von 75° bis 85°, einschließt.

Vorteilhafterweise kann vorgesehen sein, dass die erste Transportrichtung 91 und die zweite Transportrichtung 92 im Wesentlichen normal zueinander gerichtet sind. Vorteilhafterweise kann dabei vorgesehen sein, dass die Längsrichtung des länglichen Stückgutes 8 bei dessen Abgabe ausgangsseitig aus der Umlenkvorrichtung 1 heraus in gleicher Richtung wie bei dessen Aufnahme eingangsseitig der Umlenkvorrichtung 1 ausgerichtet ist. Insbesondere ist die Längsrichtung des länglichen Stückgutes 8 dabei auch im Quertransport parallel zur ersten Transportrichtung 91 gerichtet, wobei vorgesehen ist, dass das längliche Stückgut in einer zur ersten Transportrichtung 91 normal gerichteten zweiten Transportrichtung 92 abgegeben wird.

In vorteilhafter Weiterbildung kann vorgesehen sein, dass eine Eintakteinrichtung 6 zur getakteten Ausgabe des Stückgutes 8 vorgesehen ist, wie diese in Fig. 1 und 2 dargestellt ist, und welche Eintakteinrichtung 6 von der Umlenkvorrichtung 1 umfasst sein kann. Die Eintakteinrichtung 6 zur Förderung länglichen Stückgutes 8 im Quertransport umfasst ein endloses erstes Förderelement, auf welchem wenigstens ein erster Mitnehmer angeordnet ist, und wenigstens ein endloses zweites Förderelement, auf welchem wenigstens ein zweiter Mitnehmer angeordnet ist. Das zweite Förderelement ist wenigstens bereichsweise in zweiter Transportrichtung 92 parallel zu dem ersten Förderelement angeordnet, wobei eine erste Förderbewegung des ersten Förderelements unabhängig von einer zweiten Förderbewegung des zweiten Förderelements steuerbar ist. Vorteilhaft dabei ist, dass das längliche Stückgut 8 im Förderbereich der Eintakteinrichtung 6 wahlweise vom ersten Förderelement, oder vom wenigstens einen zweiten Förderelement gefördert werden kann, welche unabhängig voneinander bewegbar sind. Vorteilhaft dabei ist, dass die ersten Mitnehmer, die zweiten Mitnehmer unabhängig voneinander bewegbar sind, wobei der Relativabstand der Mitnehmer verändert werden kann. Vorteilhaft dabei ist, dass das längliche Stückgut 8 dabei von wenigstens einem der Mitnehmers derart steuerbar mitnehmbar ist, dass das längliche Stückgut 8 getaktet mit gleicher Geschwindigkeit und in vorbestimmbarem Abstand zu wenigstens einem weiteren Stückgut 8 ausgebbar ist. Aufeinaderfolgend ungetaktet in die Eintakteinrichtung 6 hineingeförderte Stückgüter können derart aufeinanderfolgend getaktet aus der Eintakteinrichtung 6 herausgefördert werden, womit die länglichen Stückgüter 8 zueinander in Takt gebracht werden.

Die in Fig. 1 und 2 dargestellte besonders vorteilhafte Eintakteinrichtung 6 umfasst ein endloses erstes Förderelement, ein endloses zweites Förderelement und ein endloses drittes Förderelement, wobei jedes der endloses Förderelemente genau zwei Mitnehmer aufweist. Die drei Förderelemente sind jeweils unabhängig voneinander, insbesondere mittels dreier Motoren, antreibbar. Vorteilhaft dabei ist, dass das längliche Stückgut 8 im Förderbereich der Eintakteinrichtung 6 wahlweise vom ersten Förderelement, vom zweiten Förderelement oder vom dritten Förderelement gefördert werden kann.

In vorteilhafter Weiterbildung der Umlenkvorrichtung 1 kann vorgesehen sein, dass die eingangsseitige Fördergeschwindigkeit in Längstransportrichtung 91 des Stückgutes 8, die Fördergeschwindigkeit des Förderbandes 21 und die ausgangsseitige Fördergeschwindigkeit in Quertransportrichtung 92 des Stückgutes 8 aufeinander abgestimmt sind. Durch die Abstimmung der Fördergeschwindigkeit kann das Stückgut 8 besonders stückgutschonend gefördert werden und Schleifspuren am Stückgut 8 können zuverlässig vermeiden werden.

In einer - nicht dargestellten - vierten Ausführungsform kann vorgesehen sein, dass die erste Transportrichtung 91 und die zweite Transportrichtung 92 in einem Winkel von ungleich 90°, beispielsweise zwischen 94° und 135° oder zwischen 45° und 86°, aufeinander stehen. Insbesondere kann vorgesehen sein, dass die erste Transportrichtung 91 und die zweite Transportrichtung 92 in einem spitzen Winkel aufeinander stehen, also einen Winkel kleiner als 90° einschließen. Vorteilhaft dabei ist, dass die Umlenkung weiterhin sehr stückgutschonend erfolgen kann und dass die Umlenkvorrichtung 1, insbesondere die Systemgrenze der Umlenkvorrichtung 1, einen geringen Flächenbedarf aufweist.

In einer fünften Ausführungsform der Umlenkvorrichtung 1 kann vorgesehen sein, dass die Einrichtung zur Ausbildung des Unterdruck auch zur Ausbildung eines Überdruck geeignet ist. Bei unterhalb der Förderebene 3 anliegendem Überdruck strömt Umgebungsgas, insbesondere Luft, von unten durch das luftdurchlässige Förderband 21 hindurch und hebt das längliche Stückgut 21 ab. Vorteilhaft dabei ist, dass das längliche Stückgut 8 für eine vorbestimmbare Zeitspanne mit sehr geringer Reibung in gleitendem Kontakt mit dem Förderband 21 sein kann bzw. auf einem Gas- und/oder Luftpolster über dem Förderband 21 entlang gleiten kann.

Die Fig. 2 zeigt schematisch eine Arbeitseinrichtung 50 im Grundriss. Die dargestellte Arbeitseinrichtung 50 umfasst wenigstens - im Fördersinn des Stückgutes 8 hintereinander geschaltet - eine zweite Umlenkstation 51 zur Umlenkung des Stückgutes 8 vom Quertransport in den Längstransport, eine Längsarbeitsstation 52 zum Bearbeiten, Markieren und/oder Beurteilen des länglichen Stückgutes 8 in dessen Längstransport, den Längsförderer 7, die Umlenkvorrichtung 1 und den Querförderer 5. Die Systemgrenzen der Umlenkvorrichtung 1 sind auch in Fig. 2 mittels der ersten Vorrichtungsgrenze 12 der Umlenkvorrichtung 1 und der zweiten Vorrichtungsgrenze 13 der Umlenkvorrichtung 1 schematisch dargestellt. Die Längsarbeitsstation 52 kann insbesondere als Scannerstation zum prüfenden Beurteilen des Stückgutes 8 und/oder als Markierungsstation zum Markieren des Stückgutes 8 ausgebildet sein.

Bei der dargestellten Arbeitseinrichtung 50 wird das längliche Stückgut 8 im Quertransport in einer Anfördertransportrichtung 94 angefördert, mittels der zweiten Umlenkstation 51 in den Längstransport umgelenkt und im Längstransport in der ersten Transportrichtung 91 in Richtung der Längsarbeitsstation 51 gefördert, insbesondere mittels eines zweiten Längsförderers 75. Während des Längstransports kann das Stückgut 8 gescannt werden, also prüfend beurteilt werden und/oder gegebenenfalls mittels Markierungsstation markiert werden. Von der Längsarbeitsstation 50 wird das Stückgut 8 mittels des Längsförderers 7 weiter zur Bremseinrichtung 2 der Umlenkvorrichtung 1 gefördert. Dabei wird das Stückgut 8 im Längstransport über die erste Vorrichtungsgrenze 12 der Umlenkvorrichtung 1 hinweg gefördert. Auf der Bremseinrichtung 2 wird das Stückgut 8 in Richtung der ersten Transportrichtung 91 abgebremst und gegebenenfalls in Richtung der zweiten Transportrichtung 92 beschleunigt. Anschließend wird das Stückgut 8 vom Bremseinrichtung 2 auf den Quertransporter 5 gefördert und vom Quertransporter 5 im Quertransport in die zweite Transportrichtung 92 weiter gefördert. Dabei wird das Stückgut 8 im Quertransport über die zweite Vorrichtungsgrenze 13 der Umlenkvorrichtung 1 hinweg gefördert.

Die Eintakteinrichtung 6 kann auch in diesem Zusammenhang der Umlenkvorrichtung 1 nachgeschaltet sein, wie dies ebenfalls in Fig. 2 dargestellt ist. Vom Quertransporter 5 wird das längliche Stückgut 8 auf die Eintakteinrichtung 6 gefördert auf dieser entweder wenigstens von einem der ersten Mitnehmern, einem der zweiten Mitnehmern oder einem der dritten Mitnehmern erfasst.

Bei der zweiten Umlenkstation 51 für das längliche Stückgut 8, wobei das Stückgut 8 eingangsseitig mittels einer Übergabeeinrichtung 54 im Quertransport aufgenommen wird und an einem Ausgang im Längstransport abgegeben wird, kann insbesondere vorgesehen sein, dass die zweite Umlenkstation 51 eine Beschleunigungseinrichtung 55 zur Beschleunigung in die erste Transportrichtung 91 im Wesentlichen kegelstumpfförmige Walzen 56 zur Aufnahme der Stückgüter 8 umfasst. Dadurch kann eine stückgutschonende beschleunigende Wirkung auf das längliche Stückgut 8 in Längsrichtung des Stückgutes 8 ausgeübt werden. Dabei kann gewährleistet sein, dass bei konstanter Drehzahl der Walzen 56 eingangsseitig der Beschleunigungseinrichtung 55 die Geschwindigkeitskomponente der Fördergeschwindigkeit in die erste Transportrichtung 91 gering ist und, wenn das längliche Stückgut von der Übergabeeinrichtung 54 weg gefördert wird, dass die Geschwindigkeitskomponente der Fördergeschwindigkeit in die erste Transportrichtung 91 des länglichen Stückgutes 8 kontinuierlich zunimmt. Vorteilhaft dabei ist, dass das längliche Stückgut 8 in der zweiten Umlenkstation 51 in Quertransportrichtung, also in Anfördertransportrichtung 94, kontinuierlich abgebremst und in Längstransportrichtung, also in der ersten Transportrichtung 91, kontinuierlich beschleunigt werden kann. Vorteilhaft dabei ist, dass das längliche Stückgut 8 kaum ruckartigen Beschleunigungen und Belastungen ausgesetzt ist, womit das längliche Stückgut bei einem hohen Durchsatz dennoch stückgutschonend und energieeffizient umgelenkt werden kann.

Die Beschleunigungseinrichtung 55 der zweiten Umlenkstation 51 gewährleistet, dass die länglichen Stückgüter 8 schnell, anlagenschonend, effizient und stückgutschonend vom Quertransport in den Längstransport umgelenkt werden können. Insbesondere ist die Beschleunigungseinrichtung 55 der zweiten Umlenkstation 51 geeignet eine derart hohe Beschleunigung zu ermöglichen, dass Stückgut 8 mit einem Längen-Breiten-Verhältnis von bis zu 100:1 zuverlässig mit hohem Durchsatz beschleunigt werden kann. Hiezu kann die Längsfördergeschwindigkeit des Stückgutes 8 in die erste Transportrichtung 91 beispielsweise in etwa bis zur 100fachen, beispielsweise der 75fachen, der Querfördergeschwindigkeit des Stückgutes 8 in die Anförderrichtung 94 entsprechen.

Insbesondere können Wartungskosten, Energiekosten und CO2-Ausstoß der zweiten Umlenkstation 51 und somit auch der gesamten Arbeitseinrichtung 50 gering gehalten werden. Die in Fig. 2 dargestellte vorteilhafte Arbeitseinrichtung 50 ermöglicht, dass das Stückgut 8 schnell, anlagenschonend, effizient und stückgutschonend beschleunigt und anschließend wieder abgebremst werden kann. Dies ermöglicht einen hohen Durchsatz, zu welchem hohen Durchsatz ein hohe Fördergeschwindigkeiten beim Längstransport des Stückgutes 8 notwendig sind.

Sämtliche der in Fig. 2 schematisch dargestellten Auflageflächen zur Förderung des Stückgutes 8 können in einer Ebene angeordnet sein, welche Ebene als die Förderebene 3 bezeichnet werden kann. Vorteilhaft dabei ist, dass das Stückgut 8 während der Förderung entlang der Arbeitseinrichtung 50 weder angehoben noch abgesenkt wird.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Umlenkvorrichtung (1) für längliches Stückgut (8), wobei das Stückgut (8) eingangseitig im Längstransport aufgenommen wird und ausgangsseitig im Quertransport abgegeben wird, **dadurch gekennzeichnet, dass** eine Bremseinrichtung (2) mit wenigstens einem eine Förderebene (3) ausbildenden Förderband (21) vorgesehen ist, und dass das Förderband (21) zumindest bereichsweise luftdurchlässig ist und unterhalb der Förderebene (3) eine Einrichtung zur Ausbildung eines Unterdruck angeordnet ist.

2. Umlenkvorrichtung nach Anspruch 1, **dadurch gekennzeichnet, dass** das Förderband (21) normal zur Förderebene (3) Durchgangsöffnungen (22) zur Ausbildung der Luftdurchlässigkeit aufweist.

3. Umlenkvorrichtung nach Anspruch 1 oder 2, **dadurch gekennzeichnet, dass** eine Bewegungsrichtung (93) des Förderbandes (21) in der Förderebene (3) mit einer eingangseitigen ersten Transportrichtung (91) im Längstransport einen Winkel im Bereich von 0° bis 25°, insbesondere 5° bis 15°, einschließt.

4. Umlenkvorrichtung nach einem der Ansprüche 1 bis 3, **dadurch gekennzeichnet, dass** eine Bewegungsrichtung (93) des Förderbandes (21) in der Förderebene (3) mit einer ausgangsseitigen zweiten Transportrichtung (92) im Quertransport einen Winkel im Bereich von 65° bis 90°, insbesondere 75° bis 85°, einschließt.

5. Umlenkvorrichtung nach einem der Ansprüche 1 bis 4, **dadurch gekennzeichnet, dass** ein Längsförderer (7) zum eingangseitigen Längstransport des Stückgutes (8) vorgesehen ist.

6. Umlenkvorrichtung nach einem der Ansprüche 1 bis 5, **dadurch gekennzeichnet, dass** ein Querförderer (5) zum ausgangsseitigen Quertransport des Stückgutes (8) vorgesehen ist.

7. Umlenkvorrichtung nach einem der Ansprüche 1 bis 6, **dadurch gekennzeichnet, dass** eine Eintakteinrichtung (6) zur getakteten Ausgabe des Stückgutes (8) vorgesehen ist.

8. Umlenkvorrichtung nach einem der Ansprüche 4 bis 7, **dadurch gekennzeichnet, dass** die erste Transportrichtung (91) und die zweite Transportrichtung (92) normal aufeinander gerichtet sind.

9. Umlenkvorrichtung nach einem der Ansprüche 1 bis 8, **dadurch gekennzeichnet, dass** die Einrichtung zur Ausbildung eines Unterdruck mehrere Einzelsegmente umfasst, und dass die Einzelsegmente zur Ausbildung unterschiedlicher Unterdrücke in nebeneinanderliegenden Bereichen unterhalb der Förderebene (3) angeordnet sind und unabhängig voneinander steuerbar sind.

10. Verfahren zum Umlenken länglichen Stückgutes (8), wobei das Stückgut (8) eingangseitig im Längstransport aufgenommen wird und ausgangsseitig im Quertransport abgegeben wird, **dadurch gekennzeichnet, dass** das Stückgut (8) eingangsseitig im Längstransport auf eine Bremseinrichtung (2) mit wenigstens einem eine Förderebene (3) ausbildenden und zumindest bereichsweise luftdurchlässig ausgebildeten Förderband (21) gefördert wird, dass mit einer unterhalb Förderebene (3) angeordneten Einrichtung zur Ausbildung eines Unterdruck ein Unterdruck ausgebildet wird, wobei das Stückgut (8) an das Förderband (21) angesaugt wird, und dass das Stückgut (8) wenigstens zeitweise mit der Bewegung des Förderbandes (21) mitbewegt wird.

11. Verfahren nach Anspruch 10, **dadurch gekennzeichnet, dass** das Stückgut (8) eingangseitig in einer ersten Transportrichtung (91) aufgenommen wird und ausgangseitig in einer zur ersten Transportrichtung (91) normal gerichteten zweiten Transportrichtung (92) abgegeben wird.
